# EUROPÄISCHE PATENTSCHRIFT

(11) **EP 4 088 916 B1**
(45) Veröffentlichungstag und Bekanntmachung des Hinweises auf die Patenterteilung: **25.02.2026**
(21) Anmeldenummer: 22167908.7
(22) Anmeldetag: 12.04.2022
(51) Int. Cl.: B29C 70/54, B29C 70/44

(54) **MEHRLAGIGES VORKONFEKTIONIERTES ABDECKMITTEL**
MULTILAYER PREFABRICATED COVERING MEANS
MOYEN DE RECOUVREMENT PRÉFABRIQUÉ MULTICOUCHE

(30) Priorität: 19.04.2021 DE 102021109829
(43) Veröffentlichungstag der Anmeldung: 16.11.2022
(73) Patentinhaber: TWIM Holding GmbH, 49477 Ibbenbüren (DE)
(72) Erfinder: Dierkes, Dominik, 49477 Ibbenbüren (DE)
(74) Vertreter: Weeg, Thomas

(56) Entgegenhaltungen:
- DE-U1- 202015 004 313

## Beschreibung

Die vorliegende Erfindung bezieht sich auf ein mehrlagiges Abdeckmittel nach dem Oberbegriff des Anspruchs 1.

Aus der Schrift DE 10 2017 130 201 A1 ist es bekannt, den Bauteilraum in einem Werkzeug zur Herstellung eines Faserverbundbauteils mit einem gattungsgemäßen Abdeckmittel herzustellen, wobei die einzelnen Lagen des Abdeckmittels nacheinander auf das offene Werkzeug aufgelegt werden.

Aus der Schrift DE 10 2019 115 447 A1 ist es bekannt, ein mehrteiliges Werkzeug zu verwenden, dessen Teile einen Formhohlraum umfangseitig begrenzen. Das Werkzeug verfügt über Entlüftungsöffnungen, über die im Formhohlraum und im eingespritzten Matrixmaterial befindliches Gas abgesaugt wird.

Ein gattungsgemäßes Abdeckmittel ist aus der Schrift DE 20 2015 004 313 U1 bekannt. Die Montage erfolgt herkömmlich durch einen sequentiellen Aufbau der einzelnen Lagen im Werkzeug.

Es ist ein Problem, die Entlüftungsöffnungen gegen den Austritt von Matrixmaterial abzudichten. Es ist schwierig, die bekannten mehreren Lagen so in einem Werkzeug auszurichten, dass im Bauteilraum befindliches Gas auch durch die Entlüftungsöffnung abgeführt werden kann. Die Folie muss an einer geeigneten Stelle geöffnet und zur Entlüftungsöffnung hin abgedichtet werden. Wenn die Abdichtung nicht perfekt gelingt, kann das dazu führen, dass die Entlüftungsöffnung verstopft und das dadurch unvollkommen hergestellte Faserverbundbauteil als Ausschuss zu entsorgen ist. Wenn Matrixmaterial in die Entlüftungsöffnung einläuft, ist diese verstopft, und es kann kein Gas mehr aus dem Formhohlraum abgesaugt werden.

Ein weiteres Problem ist darin zu sehen, dass die Entlüftungsöffnung nur im Mündungsbereich der Entlüftungsöffnung Gas aus dem Matrixmaterial absaugen kann. Eine großflächigere Absaugung ist mit diesem Werkzeug nicht möglich. Es ist zwar möglich, den Bauteilraum auf die bekannte Weise nacheinander mit den mehreren Lagen des Abdeckmittels abzudecken, mit dieser Art des Abdeckens ist aber ein erheblicher manueller Arbeitsaufwand und ein erheblicher Materialverbrauch verbunden.

Es ist die Aufgabe der vorliegenden Erfindung, eine Lösung zu schaffen, mit der die Entlüftungsöffnungen von mehrteiligen Werkzeugen zur Herstellung eines Faserverbundbauteils auf einfache Weise gegen eindringendes Matrixmaterial abgedichtet werden können. Dabei soll auch eine Lösung gefunden werden, wie die Absaugwirkung der Entlüftungsöffnung in der Fläche erweitert werden kann.

Die Aufgabe wird für ein gattungsgemäßes Abdeckmittel durch die kennzeichnenden Merkmale des Anspruchs 1 gelöst.

Die Aufgabe wird für ein gattungsgemäßes Verfahren gelöst, indem zur Abdichtung gegen eindringendes Matrixmaterial ein Abdeckmittel nach einem der Ansprüche 1 bis 8 verwendet wird.

Das als vorkonfektionierter Materiallappen ausgebildete Abdeckmittel kann als ein einziges Teil mit dem Anlageelement im Bereich der Entlüftungsöffnung an die Innenseite der Werkzeugwand angelegt werden. Die Membran sperrt den Absaugraum innerhalb des Abdeckmittels gegen flüssiges Matrixmaterial ab, das in den Bauteilraum eingeleitet wird. Die Folie dichtet den Absaugraum auf der der Membran gegenüber liegenden Seite gas- und matrixmaterialdicht gegen das Matrixmaterial ab.

Anstelle einer Folie könnte dort auch eine zumindest matrixmaterialdichte Membran verwendet werden, eine Folie ist dort allerdings günstiger, ohne dafür technische Nachteile in Kauf nehmen zu müssen. Da die Folie im normalen Anwendungsfall mit ihrer Außenseite an der Innenseite der Werkzeugwand anliegt, kann dort kein oder nur wenig Matrixmaterial anstehen.

Die an den Rändern zumindest matrixmaterialdicht miteinander verbundene Membran und die Folie umgrenzen dadurch einen gegen das Matrixmaterial abgedichteten Absaugraum, durch den Gas durch die Membran hindurch aus dem Bauteilraum abgesaugt werden kann. Um eine plane Anlage der Folie auf der Membran zu vermeiden, bei der der Absaugraum kollabiert und kein Gas mehr durch ihn hindurch strömen kann, ist in den Absaugraum eine Fließhilfe eingelegt. Die Fließhilfe besteht beispielsweise aus einem faserigen Material wie einem Vlies oder einem Gewirk, das noch vom Gas durchströmt werden kann und das auch unter Einwirkung eines am Werkzeug anliegenden Vakuums die Membran und die Folie auf Abstand zueinander hält.

Das Abdeckmittel verfügt über eine Öffnung in der Folie, durch die in den Absaugraum gesaugtes Gas aus dem Abdeckmittel in Richtung der Entlüftungsöffnung ausströmen kann. Über die Membran hält das Abdeckmittel also Matrixmaterial von der Entlüftungsöffnung fern, aus dem Bauteilraum abgesaugtes Gas kann aber aus dem Absaugraum durch die Öffnung frei in die Entlüftungsöffnung strömen, so dass die Gasabsaugung aus dem Bauteilraum durch das Abdeckmittel hindurch funktioniert.

Die Abdichtung des Abdeckmittels gegenüber der Innenseite der Werkzeugwand erfolgt über das Anlageelement, das ein Bestandteil des Abdeckmittels ist. Das Anlageelement wird mit seiner dem Abdeckmittel abgewandten Seite auf die Innenseite der Werkzeugwand aufgelegt, und zwar so an einer Stelle positioniert, dass das aus dem Bauteilraum in den Absaugraum des Abdeckmittels eingesogene Gas aus der Öffnung in die Entlüftungsöffnung des Werkzeugs strömen kann. Das Anlageelement bildet eine Art Kragen und Versteifung für die Folie im Bereich der Öffnung. Das Anlageelement kann so ausgeformt sein, dass es sich formschlüssig an die Wandung der Entlüftungsöffnung anlegt. Es kann beispielsweise über Haltestutzen, Clipse und dergleichen in der Einbaulage gehalten sein. Es ist aber auch möglich, das Abdeckmittel mit der Anlagefläche des Anlageelements durch einen Unterdruck im Bereich der Entlüftungsöffnung zu halten oder sonstige Befestigungshilfsmittel zu verwenden, wie beispielsweise Kleber oder dergleichen, der eine Anhaftung zwischen der Anlagefläche und der Innenseite der Werkzeugwand vermittelt.

Da das Anlageelement zumindest matrixmaterialdicht mit der Folie verbunden ist, kann das im Bauteilraum und/oder im Matrixmaterial befindliche Matrixmaterial nicht durch den Übergangsbereich zwischen der Folie und dem Anlageelement in die Entlüftungsöffnung gelangen. Wenn die Verbindung nicht nur matrixmaterial-, sondern auch gasdicht ausgeführt ist, kann auch kein Gas durch die Anbindungszone strömen. Das Vakuum wirkt dadurch nur auf die Membran, und Gas gelangt nur durch die Membran in den Absaugraum und in die Entlüftungsöffnung. Natürlich wird auch die Verbindung zwischen der Anlagefläche des Anlageelements und der Innenseite der Werkzeugwand zumindest matrixmaterialdicht ausgeführt.

Mit dem erfindungsgemäßen Abdeckmittel können die Entlüftungsöffnungen von mehrteiligen Werkzeugen zur Herstellung eines Faserverbundbauteils auf einfache Weise gegen eindringendes Matrixmaterial abgedichtet werden, indem nur das Abdeckmittel von der Bauteilraumseite her auf die Eintrittsöffnung gelegt wird. Es ist nicht mehr erforderlich, jeweils einzelne Lagen einer Abdeckung im Mündungsbereich der Entlüftungsöffnung in den Bauteilraum einzulegen, zu befestigen und abzudichten. Indem die Lagen bereits zu dem fertigen Abdeckmittel miteinander verbunden und abgedichtet sind, muss nur noch das einzelne Abdeckmittel im Mündungsbereich der Entlüftungsöffnung angebracht werden. Nachträgliche Abdichtarbeiten entfallen.

Ist ein Abdeckmittel an eine Entlüftungsöffnung angeschlossen, ist es möglich, Gas aus dem Bauteilraum über die gesamte Fläche der Membran abzusaugen. Da die Fläche der Membran bei einer bevorzugten Ausgestaltung des Abdeckmittels größer ist als die Querschnittfläche der Entlüftungsöffnung, erfolgt die Absaugung auf einer größeren Fläche als das der Fall wäre, wenn das Gas nur über die Entlüftungsöffnung abgesaugt würde.

Die Anlagefläche ist mit einer Klebeschicht versehen, mit der das Abdeckmittel auf der Innenseite der den Bauteilraum begrenzenden Werkzeugwand festlegbar ist. Wenn die Anlagefläche mit einer Klebeschicht versehen ist, genügt es zur Anbringung und Befestigung des Abdeckmittels an der Werkzeugwand, das Abdeckmittel mit der Anlagefläche auf die Innenseite der Werkzeugwand anzudrücken. Das Abdeckmittel ist dann in seiner Solllage fest angebracht, ohne dass dafür zusätzliche Arbeiten erforderlich sind.

Nach einer Ausgestaltung der Erfindung ist die Klebeschicht mit einer nach außen nicht klebenden Abziehfolie versehen. Die Abziehfolie schützt die Klebeschicht gegen eine ungewollte Anhaftung an anderen Gegenständen vor der bestimmungsgemäßen Verwendung.

Nach einer Ausgestaltung der Erfindung sind die Klebeschicht und die Anlagefläche zur Herstellung einer zumindest matrixmaterialdichten Anlage auf der Innenseite einer den Bauteilraum begrenzenden Werkzeugwand ausgebildet. Die Form, Größe und Oberflächenbeschaffenheit der Anlagefläche muss so ausgebildet sein, dass in der jeweiligen Anwendung kein Matrixmaterial durch die Anbindungszone des Anlageelements an die Werkzeugwand in den Bereich der Entlüftungsöffnung gelangen kann. Der in der Klebeschicht verwendete Kleber ist so ausgestaltet, dass er vom Matrixmaterial während der Flutungs- und Abbindephase des Matrixmaterials nicht aufgelöst wird und die Abdeckmittel betriebssicher in der Einbauposition hält.

Nach einer Ausgestaltung der Erfindung ist die Öffnung rund ausgebildet und das Anlageelement umschließt die Öffnung mit einer ebenfalls rund gestalteten Anlagefläche. Die runden Formen passen zu üblicherweise ebenfalls runden Formen der Entlüftungsöffnungen. Geringe maßliche Unterschiede können durch eine großzügige Dimensionierung der Anlagefläche des Anlageelements kompensiert werden, so dass ein Abdeckmittel auf verschieden große Entlüftungsöffnungen passt.

Nach einer Ausgestaltung der Erfindung weist die Anlagefläche eine Breite in radialer Richtung von der Mitte der Öffnung her auf, die mindestens einem Viertel des Durchmessers der Öffnung entspricht. Die Breite der Anlagefläche ermöglicht es, das Abdeckmittel auf verschieden große Entlüftungsöffnungen aufzusetzen. Über die Breite der Anlageflächen ist es aber auch möglich, punktuelle Unebenheiten und Verschmutzungen, die im Anbindungsbereich vorhanden sein und potentiell zu Undichtigkeiten der Verbindung führen könnten, über die größere umgebende Anlagefläche zu kompensieren.

Nach einer Ausgestaltung der Erfindung sind die Membran und die Folie an den umfangsseitigen Rändern thermisch miteinander verschweißt. Die Verschweißung ist als Verbindung kostengünstig, schnell und funktionssicher herstellbar.

Nach einer Ausgestaltung der Erfindung ist das Anlageelement aus einem Butylkautschuk mit einer geschlossen ausgebildeten Anlagefläche hergestellt. Der Butylkautschuk weist ein elastisches Verhalten auf, dämpft Schwingungs- und Stoßenergie gut und bietet eine gute Beständigkeit gegen Säuren und Basen. Er verformt sich unter der Einwirkung von Druck und passt sich so optimal an die Konturen des Umgebungsbereichs der Entlüftungsöffnung an. Dadurch kann sich das Anlageelement flexibel an die jeweilige Form der Innenseite einer den Bauteilraum begrenzenden Werkzeugwand anpassen und sich sicher abdichtend daran anlegen.

Nach einer Ausgestaltung der Erfindung überschreitet die Größe der planen Fläche des Abdeckmittels die Querschnittsfläche der Öffnung um mehr als das Fünffache. Bei einem solchen Größenverhältnis ergibt sich eine günstige Relation zwischen der Absaugwirkung des Abdeckmittels und der Abführung des abgesaugten Gases durch die Entlüftungsöffnung.

Weitere Merkmale der Erfindung ergeben sich aus den Ansprüchen, der Figur und der gegenständlichen Beschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar, sofern dies durch den Umfang der Ansprüche abgedeckt ist.

Die Erfindung wird nun anhand eines bevorzugten Ausführungsbeispiels sowie unter Bezugnahme auf die beigefügten Zeichnungen näher erläutert.

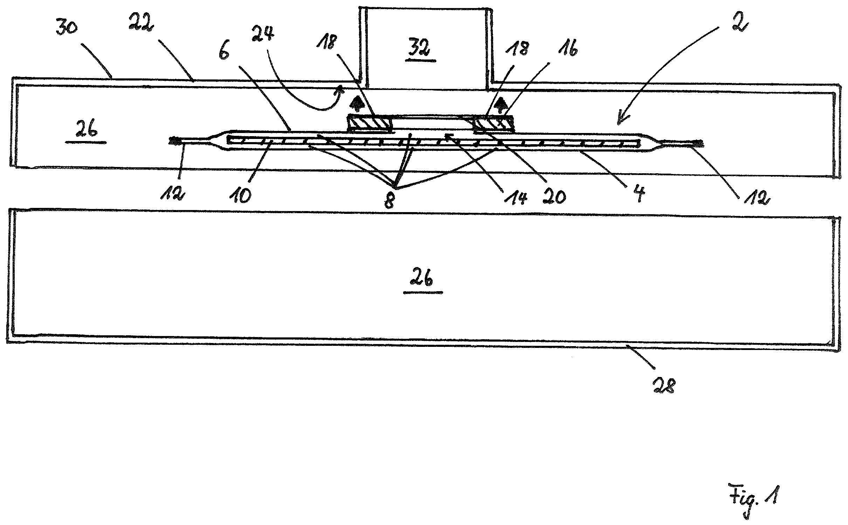

Die Fig. 1 zeigt einen Querschnitt durch ein Abdeckmittel 2, das sich im Bauteilraum 26 eines Werkzeugs befindet. Das Abdeckmittel 2 weist auf einer Seite die Membran 4 und auf der anderen Seite die Folie 6 auf. Die Membran 4 und die Folie 6 umgrenzen den Absaugraum 8, durch den das durch die Membran 4 hindurch aus dem Bauteilraum 26 abgesaugte Gas in Richtung der Öffnung 14 strömt. Um das Eindringen von Matrixmaterial in den Absaugraum 8 zu verhindern, sind die Membran 4 und die Folie 6 im Bereich der Ränder 12 zumindest matrixmaterialdicht miteinander verbunden.

Auf der dem Bauteilraum 26 abgewandten Seite des Abdeckmittels 2 ist im Bereich der Öffnung 14 ein Anlageelement 16 auf die Außenseite der Folie 6 aufgesetzt. Mit der an dem Anlageelement 16 ausgebildeten Anlagefläche 18 kann das Abdeckmittel 2 auf der Innenseite 24 einer Werkzeugwand 22 im Bereich einer Entlüftungsöffnung 32 aufgesetzt werden. Um die Anhaftung des Abdeckmittels 2 auf der Werkzeugwand 22 zu verbessern, kann auf der Anlagefläche 18 eine Klebeschicht 20 angeordnet sein, über die das Abdeckmittel 2 an der Werkzeugwand 22 festklebt.

In der anliegenden Fig. 1 ist das Abdeckmittel 2 noch nicht an der Werkzeugwand 22 befestigt. Um das Abdeckmittel 2 an der Werkzeugwand 22 zu befestigen, muss es in Richtung der beiden Pfeile über der Anlagefläche 18 auf die Werkzeugwand aufgedrückt werden. Danach ist es zumindest matrixmaterialdicht mit der Innenseite 24 der Werkzeugwand 22 verbunden. In der Fig. 1 ist erkennbar, dass die Durchmesser der Öffnung 14 und der Entlüftungsöffnung 32 nicht genau übereinstimmen. Die maßlichen Unterschiede werden aber über die Breite der Anlagefläche 18 kompensiert, so dass ein Abdeckmittel mit einer Öffnung 14, deren Durchmesser kleiner ist als der Durchmesser der Entlüftungsöffnung 32, gleichwohl zur Abdichtung einer solchen Entlüftungsöffnung verwendet werden kann.

In dem in Fig. 1 dargestellten Ausführungsbeispiel besteht das Werkzeug aus einem ersten Teil 28, das den unteren Teil des Bauteilraums 26 umgrenzt, und einem zweiten Teil 30, das den Bauteilraum 26 nach oben hin abdeckt. Bevorzugt werden die Lagen des das fertige Bauteil verstärkenden Fasern in das erste Teil 28 eingelegt, bevor der Bauteilraum 26 geschlossen und dieser beispielsweise mit dem Vakuum-Infusionsverfahren mit Matrixmaterial geflutet wird. Wenn die Teile 28, 30 aufeinander aufgesetzt sind, ist der Bauteilraum 26 geschlossen. Nach dem Schließen des Werkzeugs wird der Bauteilraum 26 durch ein Vakuum, das an die Entlüftungsöffnung 32 angelegt ist, evakuiert. Aus Vereinfachungsgründen sind die Vakuumpumpe mit ihren zugehörigen Schlauchleitungen sowie der Tank und die Zuleitung zur Zuführung des Matrixmaterials nicht zeichnerisch in der Fig. 1 dargestellt.

Abschließend wird darauf hingewiesen, dass die Größe des in Fig. 1 dargestellten Abdeckmittels 2 sowie dessen Bestandteile im Verhältnis zur Entlüftungsöffnung 32, dem Werkzeug insgesamt und die Größenverhältnisse der einzelnen Bauteile des Abdeckmittels 2 zueinander sowie die Form, Anordnung und Dimensionierung der einzelnen Bauteile vom gezeigten Ausführungsbeispiel abweichen können.

Die Erfindung ist nicht auf die vorstehenden Ausführungsbeispiele beschränkt.

Der Schutzumfang ist durch die Ansprüche definiert. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

- 2: Abdeckmittel
- 4: Membran
- 6: Folie
- 8: Absaugraum
- 10: Fließhilfe
- 12: Rand
- 14: Öffnung
- 16: Anlageelement
- 18: Anlagefläche
- 20: Klebeschicht
- 22: Werkzeugwand

## Patentansprüche

1. Mehrlagiges Abdeckmittel (2) zur Abdeckung eines Bauteilraums in einem Werkzeug zur Herstellung eines Faserverbundbauteils, mit einer Lage einer gasdurchlässigen, aber matrixmaterialundurchlässigen Membran (4) und einer gas- und matrixmaterialundurchlässigen Folie (6), die zwischen sich einen Absaugraum (8) zur Evakuierung von einem aus dem Bauteilraum durch die Membran (4) in den Absaugraum (8) gelangten Gas begrenzen, und einer im Absaugraum (8) zwischen der Membran (4) und der Folie (6) angeordneten Lage einer Fließhilfe (10), wobei das Abdeckmittel (2) als ein mehrlagiger vorkonfektionierter Materiallappen ausgebildet ist, der Absaugraum (8) des Abdeckmittels (2) an seinen umfangseitigen Rändern (12) durch eine zumindest matrixmaterialdichte Verbindung der Membran (4) mit der Folie (6) geschlossen ist, die Folie (6) eine Öffnung (14) aufweist, die dazu bestimmt ist, das in den Absaugraum (8) eingeströmte Gas in eine vom Bauteilraum entfernte Richtung entweichen zu lassen, auf der dem Absaugraum (8) abgewandten Seite der Folie (6) ein die Öffnung (14) umgrenzendes Anlageelement (16) angeordnet ist, das zumindest matrixmaterialdicht mit der Folie (6) verbunden ist, und auf seiner der Folie (6) abgewandten Seite eine Anlagefläche (18) aufweist, mit der das Abdeckmittel (2) auf der Innenseite einer den Bauteilraum begrenzenden und nicht zum Abdeckmittel gehörigen Werkzeugwand (22) anlegbar ist, **dadurch gekennzeichnet, dass** die Anlagefläche (18) mit einer Klebeschicht (20) versehen ist, mit der das Abdeckmittel (2) auf der Innenseite der den Bauteilraum begrenzenden Werkzeugwand (22) festlegbar ist.

2. Abdeckmittel (2) nach Anspruch 1, **dadurch gekennzeichnet, dass** die Klebeschicht (20) mit einer nach außen nicht klebenden Abziehfolie versehen ist.

3. Abdeckmittel (2) nach einem der vorhergehenden Ansprüche 1 oder 2, **dadurch gekennzeichnet, dass** die Klebeschicht (20) und die Anlagefläche (18) zur Herstellung einer zumindest matrixmaterialdichten Anlage auf der Innenseite einer den Bauteilraum begrenzenden Werkzeugwand (22) ausgebildet sind.

4. Abdeckmittel (2) nach einem der vorhergehenden Ansprüche, **dadurch gekennzeichnet, dass** die Öffnung (14) rund ausgebildet ist und das Anlageelement (16) die Öffnung (14) mit einer ebenfalls rund gestalteten Anlagefläche (18) umschließt.

5. Abdeckmittel (2) nach einem der vorhergehenden Ansprüche, **dadurch gekennzeichnet, dass** die Anlagefläche (18) eine Breite in radialer Richtung von der Mitte der Öffnung (14) her aufweist, die mindestens einem Viertel des Durchmessers der Öffnung (14) entspricht.

6. Abdeckmittel (2) nach einem der vorhergehenden Ansprüche, **dadurch gekennzeichnet, dass** die Membran (4) und die Folie (6) an den umfangsseitigen Rändern (12) thermisch miteinander verschweißt sind.

7. Abdeckmittel (2) nach einem der vorhergehenden Ansprüche, **dadurch gekennzeichnet, dass** das Anlageelement (16) aus einem Butylkautschuk mit einer geschlossen ausgebildeten Anlagefläche (18) hergestellt ist.

8. Abdeckmittel (2) nach einem der vorhergehenden Ansprüche, **dadurch gekennzeichnet, dass** die Größe der planen Fläche des Abdeckmittels (2) die Querschnittsfläche der Öffnung (14) um mehr als das Fünffache überschreitet.

9. Verfahren zur Abdichtung einer Entlüftungsöffnung in einem Werkzeug zur Herstellung eines Faserverbundbauteils, **dadurch gekennzeichnet, dass** zur Abdichtung gegen eindringendes Matrixmaterial ein Abdeckmittel nach einem der Ansprüche 1 bis 8 verwendet wird.

## Claims

1. Multilayer covering means (2) for covering a component chamber in a die for producing a fibre-reinforced composite component, having one layer of a membrane (4), which is gas-permeable but non-permeable to matrix material, and a film (6), which is non-permeable to gas and matrix material, which membrane and film between them delimit an extraction chamber (8) for evacuating a gas that has passed from the component chamber through the membrane (4) into the extraction chamber (8), and a layer of a flow aid (10), which is arranged in the extraction chamber (8) between the membrane (4) and the film (6), wherein the covering means (2) is designed as a multilayer prefabricated material cloth, the extraction chamber (8) of the covering means (2) is closed at its circumferential edges (12) by an at least matrix-material-tight connection of the membrane (4) to the film (6), the film (6) has an opening (14), which is intended to allow the gas that has flowed into the extraction chamber (8) to escape in a direction away from the component chamber, a contact element (16) is arranged on the side of the film (6) facing away from the extraction chamber (8), which contact element surrounds the opening (14), is connected to the film (6) in an at least matrix-material-tight manner, and has, on its side facing away from the film (6), a contact face (18), with which the covering means (2) can be applied to the inside of a die wall (22) that delimits the component chamber and does not belong to the covering means, **characterized in that** the contact face (18) is provided with an adhesive layer (20), with which the covering means (2) can be fixed on the inside of the die wall (22) delimiting the component chamber.

2. Covering means (2) according to Claim 1, **characterized in that** the adhesive layer (20) is provided with an outwardly non-adhesive pull-off film.

3. Covering means (2) according to one of the preceding Claims 1 or 2, **characterized in that** the adhesive layer (20) and the contact face (18) are designed to produce an at least matrix-material-tight contact on the inside of a die wall (22) delimiting the component chamber.

4. Covering means (2) according to one of the preceding claims, **characterized in that** the opening (14) is round, and the contact element (16) encloses the opening (14) with a likewise round contact face (18).

5. Covering means (2) according to one of the preceding claims, **characterized in that** the contact face (18) has a width in the radial direction from the centre of the opening (14) that corresponds to at least a quarter of the diameter of the opening (14).

6. Covering means (2) according to one of the preceding claims, **characterized in that** the membrane (4) and the film (6) are fused thermally to one another at the circumferential edges (12).

7. Covering means (2) according to one of the preceding claims, **characterized in that** the contact element (16) is produced from a butyl rubber with a closed contact face (18).

8. Covering means (2) according to one of the preceding claims, **characterized in that** the size of the flat face of the covering means (2) exceeds the cross-sectional area of the opening (14) by more than five times.

9. Method for sealing a venting opening in a die for producing a fibre-reinforced composite component, **characterized in that** a covering means according to one of Claims 1 to 8 is used for sealing against the ingress of matrix material.

## Revendications

1. Moyen de recouvrement multicouche (2) pour recouvrir un espace de composant dans un outil pour la fabrication d'un composant en composite de fibres, avec une couche d'une membrane (4) perméable aux gaz mais imperméable au matériau de matrice et une feuille (6) imperméable aux gaz et au matériau de matrice, qui délimitent entre elles un espace d'aspiration (8) pour évacuer un gaz parvenu de l'espace de composant à travers la membrane (4) dans l'espace d'aspiration (8), et une couche d'un auxiliaire d'écoulement (10) agencée dans l'espace d'aspiration (8) entre la membrane (4) et la feuille (6), le moyen de recouvrement (2) étant réalisé sous la forme d'une pièce de matériau multicouche préconfectionnée, l'espace d'aspiration (8) du moyen de recouvrement (2) étant fermé sur ses bords périphériques (12) par une liaison au moins étanche au matériau de matrice de la membrane (4) avec la feuille (6), la feuille (6) présentant une ouverture (14) destinée à laisser s'échapper le gaz entré dans l'espace d'aspiration (8) dans une direction éloignée de l'espace de composant, sur le côté de la feuille (6) détourné de l'espace d'aspiration (8) est agencé un élément d'application (16) qui entoure l'ouverture (14), qui est relié à la feuille (6) au moins de manière étanche au matériau de matrice et qui présente, sur son côté détourné de la feuille (6), une surface d'application (18) avec laquelle le moyen de recouvrement (2) peut être appliqué sur le côté intérieur d'une paroi d'outil (22) délimitant l'espace de composants et n'appartenant pas au moyen de recouvrement, **caractérisé en ce que** la surface d'application (18) est pourvue d'une couche adhésive (20) avec laquelle le moyen de recouvrement (2) peut être fixé sur le côté intérieur de la paroi d'outil (22) délimitant l'espace de composant.

2. Moyen de recouvrement (2) selon la revendication 1, **caractérisé en ce que** la couche adhésive (20) est pourvue d'une feuille pelable non adhésive vers l'extérieur.

3. Moyen de recouvrement (2) selon l'une quelconque des revendications 1 ou 2 précédentes, **caractérisé en ce que** la couche adhésive (20) et la surface d'application (18) sont réalisées sur le côté intérieur d'une paroi d'outil (22) délimitant l'espace de composant afin de créer une application au moins étanche au matériau de matrice.

4. Moyen de recouvrement (2) selon l'une quelconque des revendications précédentes, **caractérisé en ce que** l'ouverture (14) est réalisée sous forme ronde et l'élément d'application (16) entoure l'ouverture (14) avec une surface d'application (18) également conçue sous forme ronde.

5. Moyen de recouvrement (2) selon l'une quelconque des revendications précédentes, **caractérisé en ce que** la surface d'application (18) présente une largeur dans la direction radiale à partir du centre de l'ouverture (14) qui correspond au moins à un quart du diamètre de l'ouverture (14).

6. Moyen de recouvrement (2) selon l'une quelconque des revendications précédentes, **caractérisé en ce que** la membrane (4) et la feuille (6) sont soudées thermiquement l'une à l'autre au niveau des bords périphériques (12).

7. Moyen de recouvrement (2) selon l'une quelconque des revendications précédentes, **caractérisé en ce que** l'élément d'application (16) est fabriqué à partir d'un caoutchouc butyle avec une surface d'application (18) réalisée sous forme fermée.

8. Moyen de recouvrement (2) selon l'une quelconque des revendications précédentes, **caractérisé en ce que** la taille de la surface plane du moyen de recouvrement (2) dépasse de plus de cinq fois la surface de section transversale de l'ouverture (14).

9. Procédé pour étanchéifier une ouverture d'aération dans un outil pour la fabrication d'un composant en composite de fibres, **caractérisé en ce qu'**un moyen de recouvrement selon l'une quelconque des revendications 1 à 8 est utilisé pour étanchéifier contre la pénétration de matériau de matrice.
